**Europäisches Patentamt**

**European Patent Office**

**Office européen des brevets**

(19)

(11) Veröffentlichungsnummer: **0 291 901**

**A1**

(12) # EUROPÄISCHE PATENTANMELDUNG

(21) Anmeldenummer: **88107797.8**

(22) Anmeldetag: **14.05.88**

(51) Int. Cl.⁴: **A01C 7/06**

(30) Priorität: **19.05.87 DE 3716672**

(43) Veröffentlichungstag der Anmeldung:
**23.11.88 Patentblatt 88/47**

(84) Benannte Vertragsstaaten:
**BE DE FR NL**

(71) Anmelder: **Amazonen-Werke H. Dreyer GmbH
& Co. KG
Am Amazonenwerk 9-13
D-4507 Hasbergen-Gaste(DE)**

(72) Erfinder: **Lührmann, Johannes
Bergstrasse 14
D-4512 Wallenhorst(DE)**

(54) **Einzelkornsämaschine.**

(57) Einzelkornsämaschine mit einem Rahmen, an dem nebeneinander über Gestänge die einzelnen Einzelkornsäaggregate höhenbeweglich und aushebbar angeordnet sind, wobei zusätzlich zu den Einzelkornsäaggregaten vorzugsweise separate Düngerschare vorgesehen sind, die entgegen der Fahrtrichtung ausweichbar und/oder nach oben ausweichbar am Rahmen angeordnet sind. Um das Ausheben der Düngersäschare bei Einzelkornsämaschinen aus dem Boden gegenüber dem Rahmen in einfacher Weise zu ermöglichen, ist vorgesehen, daß jeweils zwischen dem Düngersäschar (2) und dem Gestänge (10) des Einzelkornsäaggregates (1) oder dem Einzelkornsäaggregat (1) ein Koppelglied (18) angeordnet ist.

FIG 2

EP 0 291 901 A1

## Einzelkornsämaschine

Die Erfindung betrifft eine Einzelkornsämaschine gemäß des Oberbegriffes des Patentanspruches 1.

Derartige Einzelkornsämaschinen sind in der Praxis bereits bekannt sowie in der deutschen Offenlegungsschrift 35 46 468 beschrieben.

Die Einzelkornsämaschinen weisen einen Rahmen auf, an dem nebeneinander über Gestänge, die vorzugsweise als Parallelogrammlenker ausgebildet sind, die einzelnen Einzelkornsäaggregate höhenbeweglich und aushebbar angeordnet sind. Des weiteren ist bei diesen Einzelkornsäaggregaten innerhalb des Gestänges bzw. zwischen dem Gestänge und dem Rahmen eine Arretierungsvorrichtung vorgesehen, so daß die Einzelkornsägeräte gegenüber dem Rahmen ausgehoben und in dieser ausgehobenen Stellung über die Arretierungsvorrichtung festgelegt werden können. Hierdurch ist es beispielsweise möglich, einzelne Einzelkornsäaggregate in Außerbetriebsstellung zu bringen, um so die Arbeitstiefe verringern zu können. Des weiteren weisen diese Einzelkornsämaschinen in vielen Fällen auch eine Vorrichtung zum gleichzeitigen Ausbringen von Dünger beim Einbringen des Saatgutes über die Einzelkornsägeräte in den Boden auf. Hierzu sind dann am Rahmen der Einzelkornsämaschine Düngersäschare zusätzlich zu den Einzelkornsäaggregaten vorgesehen, die vorzugsweise entgegen der Fahrtrichtung ausweichbar und/oder nach oben ausweichbar am Rahmen angeordnet sind, um so im Boden festsitzenden Hindernissen ausweichen zu können, damit Beschädigungen an den Düngerscharen vermieden werden. Nun ist es jedoch erforderlich, falls einzelne Düngerschare keinen Dünger ausbringen sollen, daß dann in aufwendiger Arbeit die Düngerschare in Außerbetriebsstellung gebracht werden müssen. Des weiteren ist von Nachteil, daß die gesamte Maschine über den Dreipunktkraftheber des Schleppers ausgehoben werden muß, wenn die Düngersäschare Pflanzenreste mitschleppen und man die Pflanzenreste den Düngersäscharen enrfernen will.

Der Erfindung liegt daher die Aufgabe zugrunde, das Ausheben der Düngersäschare bei Einzelkornsämaschinen aus dem Boden gegenüber dem Rahmen in einfacher Weise zu ermöglichen.

Diese Aufgabe wird erfindungsgemäß durch die im kennzeichnenden Teil des Anspruches 1 aufgeführten Merkmale gelöst.

Infolge dieser Maßnahmen wird automatisch, wenn das Einzelsäaggregat gegenüber dem Rahmen ausgehoben wird, auch das oder die Düngersäschare mit ausgehoben oder entgegen der Fahrtrichtung nach hinten verschwenkt.

Um die Einzelkornsäaggregate beim Wenden am Feldende höher ausheben werden können, als dies allein mit dem Dreipunktkraftheber des Schleppers, an dem die Einzelkornsämaschine angebaut ist, möglich ist, ist erfindungsgemäß vorgesehen, daß zwischen dem Rahmen und dem Gestänge des Einzelkornsägerätes ein Aushubzylinder, vorzugsweise ein Hydraulikzylinder angeordnet ist. Durch das hohe Ausheben der Einzelkornsäaggregate werden beim Wenden am Feldende Beschädigungen an dem Einzelkornsäaggregat vermieden, wenn der Schlepper durch tiefe Furchen fährt. Durch die Koppelung der Aushubbewegung der Einzelkornsäaggregate mit der Aushubbewegung der Düngersäschar, werden auch die Düngersäschare mitangehoben, so daß auch eine Beschädigung vermieden wird. Des weiteren ist es vorteilhaft, mit dem Hydraulikzylinder die Einzelkornsägeräte ausheben zu können, um so sich vor dem Säschar der Einzelkornsägeräte angesammelten Pflanzen und Kluten festgesetzt haben von von Scharen zu befreien, damit es zu keinen Verstopfungen kommt. Dadurch, daß die Düngersäschare mit den Einzelkornsägeräten über das Koppelglied miteinander gekoppelt sind, so daß gleichzeitig das Düngersäschar nach hinten verschwenkt bzw. auch ausgehoben wird, wird gleichzeitig auch ein Lösen der Pflanzenreste, die sich evtl. an dem Düngersäschar angesetzt haben, erreicht. Des weiteren wirkt sich das Ausheben der Einzelkornsägeräte un der Düngersäschare über den Hydraulikzylinder auch vorteilhaft aus, wenn die Einzelkornsämaschine in Kombination hinter einem Bodenbearbeitungsgerät angeordnet ist, so daß dann in einer derartigen Kombination die Einzelkornsägeräte ausreichend weit vom Boden beim Wenden am Feldende abgehoben werden können, daß sie einen ausreichend großen Abstand zur Bodenoberfläche aufweisen.

In einer bevorzugten Ausführung der Erfindung ist vorgesehen, daß das Koppelglied als Koppelstange ausgebildet ist. Infolge dieser Maßnahmen ergibt sich eine äußerst einfache Koppelung von Düngersäschar mit dem Einzelkornsäaggregat. Damit das Düngersäschar, wenn es auf in dem Boden festsitzende Hindernisse auftrifft, nach hinten ausweichen kann, ohne daß dann das Einzelkornsägerät mit ausgehoben wird, ist erfindungsgemäß vorgesehen, daß die Koppelstange mittels Bolzen an dem Düngersäschar und dem Gestänge angeordnet ist, wobei zumindest einer dieser Bolzen in einem sich in der Koppelstange angeordneten Langloch faßt. Der gleiche Vorteil, daß das Düngersäschar unabhängig von dem Einzelkornsägerät nach hinten entgegen der Fahrtrichtung ausweichen kann, kann die Koppelstange aus mehreren zueinander beweglichen einknickbaren Teilen bestehen, bzw. kann das Koppelglied als Zugseil ausgebildet sein.

Damit die Säschare der Einzelkornsäaggregate auf unterschiedliche Arbeitstiefe einstellbar sind, ohne daß es zu einer ungewollten Verschwenkung oder Ausheben des Düngersäschares kommt, ist erfindungsgemäß vorgesehen, daß die Länge des Koppelgliedes veränderbar und an die unterschiedlichen Ablagetiefen der von den Einzelkornsägeräten im Boden abgelegten Saatkörner anpaßbar ist. Infolge dieser Maßnahme ist sichergestellt, daß die volle Aushubbewegung des Einzelkornsägerätes auch für den Aushub des Düngersäschares ausgenutzt wird. Des weiteren ist das Koppelglied so auszubilden, daß es in begrenztem Umfang Auf- und Abbewegungen des Einzelkornsägerätes gegenüber dem Rahmen ermöglicht, ohne daß es zu einer Aushubbewegung bei dem Düngersäschar kommt. Hierzu ist dann in bevorzugter Weise der Koppelbolzen, mit dem die Koppelstange an dem Gestänge des Einzelkornsäaggregates angelenkt ist, in dem Langloch an dem Gestänge des Einzelkornsäaggregates angeordnet.

Weitere Einzelheiten der Erfindung sind der Beispielsbeschreibung zu entnehmen. Hierbei zeigen

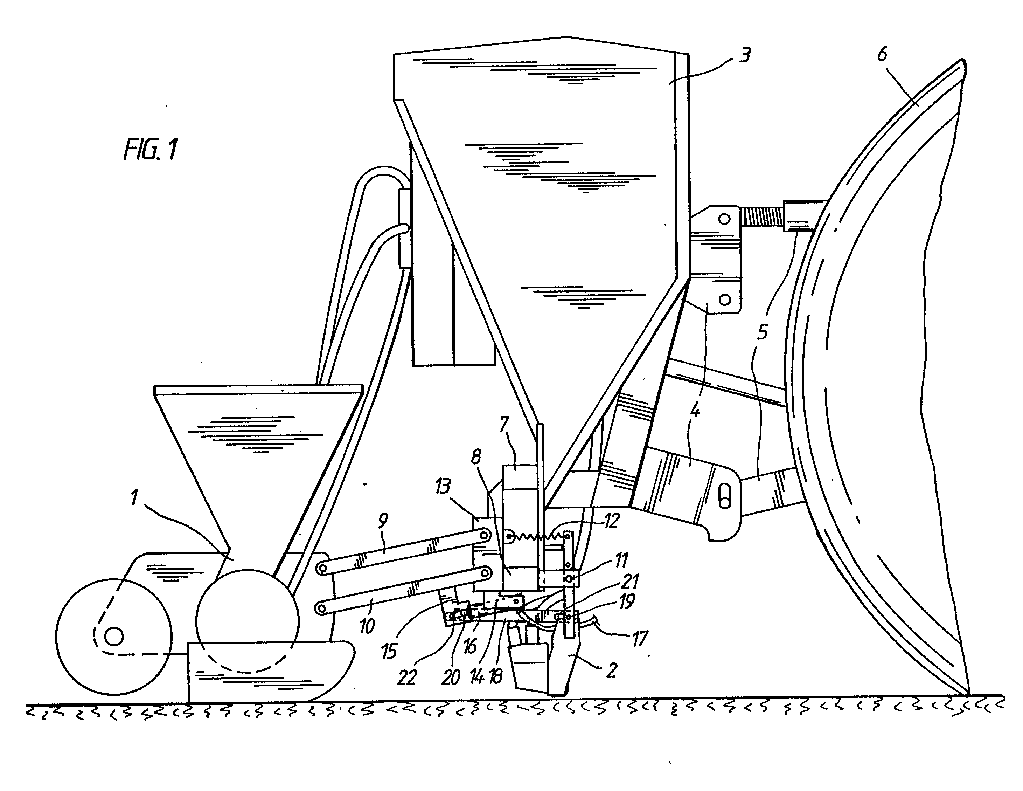

Fig. 1 eine erfindungsgemäße Einzelkornsämaschine in der Seitenansicht mit sich in Arbeitsstellung befindlichen Einzelkornsägeräten und Düngerschare,

Fig. 2 die gleiche Einzelkornsämaschine in gleicher Darstellungsweise, jedoch mit ausgehobenen Einzelkornsäaggregaten und Düngerscharen und

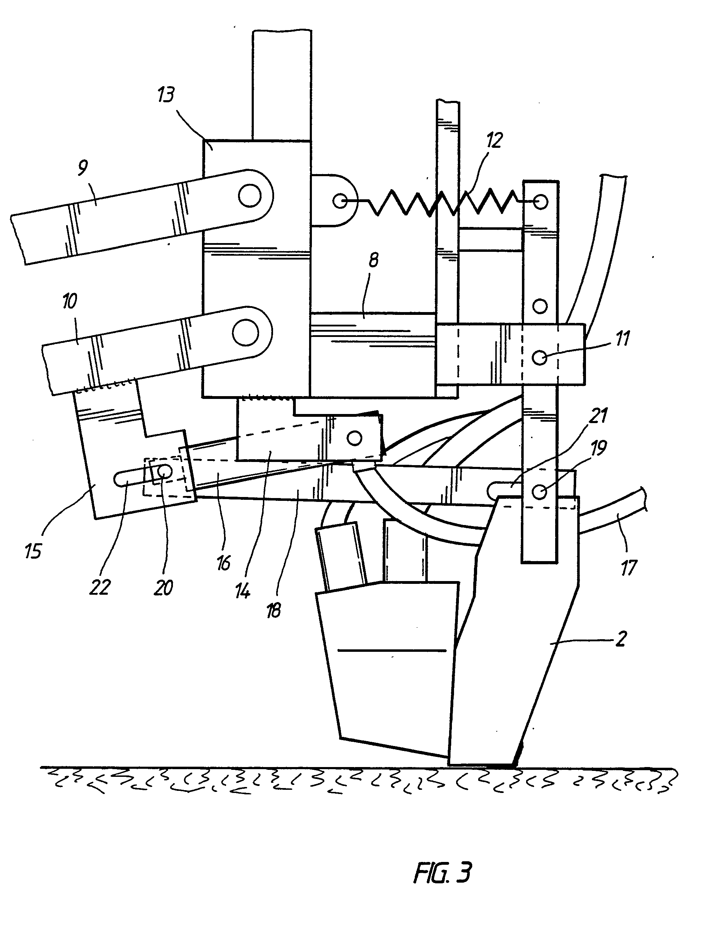

Fig. 3 die Anordnung der Koppelstange zwischen einem Düngersäschar und einem Einzelkornsäaggregat in Seitenansicht und vergrößertem Maßstab.

Die Einzelkornsämaschine besteht aus den in einer quer zur Fahrtrichtung in einem Abstand zueinander und nebeneinander angeordneten Einzelkornsäaggregaten 1, den ebenfalls in einer quer zur Fahrtrichtung verlaufenden Reihe nebeneinander angeordneten und in einem Abstand zueinander angeordneten Düngersäscharen 2 und dem Düngerbehälter 3. Des weiteren weist die Einzelkornsämaschine die an dem Rahmen des Düngerbehälters 3 angeordneten Dreipunktkupplungselemente 4 auf, über die die Einzelkornsämaschine an die Lenker 5 des Dreipunktkrafthebers des Ackerschleppers 6 anzuordnen ist. An dem Rahmen des Düngerbehälters 3 ist über Streben der aus den Querträgern 7 und 8 bestehende Tragrahmen angeordnet. An den Querträgern 7 und 8 sind die einzelnen Einzelkornsäaggregate 1 über die Parallelogrammlenker 9 und 10 in aufrechter Ebene bewegbar angeordnet. Des weiteren sind an dem unteren Querträger 8 über Halterungen jeweils die Düngersäschare 2 mittels des Bolzens 11 angelenkt. Die Düngersäschare 2 sind um den Bolzen 11 entgegen der Fahrtrichtung gegen die Kraft der Zugfeder 12 schwenkbar angeordnet. Die Zugfeder 12 ist jeweils zwischen der Halterung des Düngersäschares 2 und den Rahmen bzw. der Halterung des zugeordneten Einzelkornsäaggregates 1 befestigt. Wenn das Düngersäschar 2 auf im Boden festsitzende Hindernisse trifft, kann das Düngersäschar 2 entgegen der Fahrtrichtung nach hinten und oben um den Bolzen 11 schwenken und gegen die Kraft der Zugfeder 12 elastisch federnd ausweichen. Nach dem Passieren des Hindernisses zieht die Zugfeder 12 das Düngersäschar 2 dann wieder in die normale Arbeitsposition.

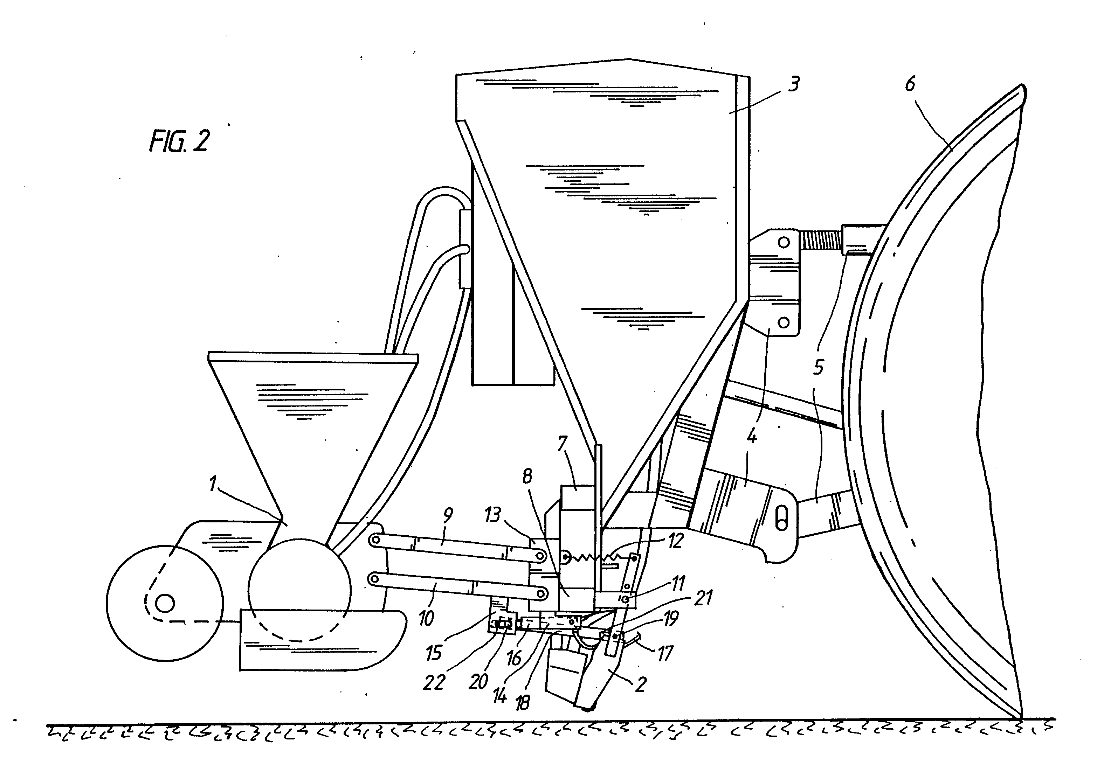

Zwischen der an dem unteren Querträger 8 befestigten Halterung 13 des Einzelkornsäaggregates 1 ist die Halterung 14 angeordnet. Des weiteren ist jeweils an dem unteren Lenker 10 des Parallelogrammgestänges, mit dem das Einzelkornsäaggregat 1 an der Halterung 13 befestigt ist, die aus Aushubhalterung 15 angeordnet. Zwischen der Halterung 14 und der Aushubhalterung 15 ist der als Hydraulikzylinder 16 ausgebildete Aushubzylinder angeordnet, der über die Hydraulikleitung 17 an die Hydraulikanlage des Schleppers 6 angeordnet ist. Über den Hydraulikzylinder 16 läßt sich somit das jeweilige Einzelkornsäaggregat 1 ausheben und in die in Fig. 2 dargestellte Position anheben.

Zwischen der Halterung des Düngersäschare 2 und der Aushubhalterung 15, die an dem Unterlenker 10 des Einzelkornsäaggregates 1 angeordnet ist, ist das als Koppelstange 18 ausgebildete Koppelglied angeordnet. Die Koppelstange 18 ist mittels des Bolzens 19 an der Halterung des Düngersäschares 2 und mittels des Bolzens 20 an der Aushubhalterung 15 befestigt. Mit dem Bolzen 20 ist ebenfalls der Hydraulikzylinder 16 an der Aushubhalterung 15 angeordnet. Die Koppelstange 18 weist im Bereich des Düngersäschares 2 das Langloch 21 auf, in das der Bolzen 19 faßt. Aufgrund des Langloches 21 kann das Düngersäschar 2 somit entgegen der Fahrtrichtung nach hinten ausweisen, ohne daß gleichzeitig diese Bewegung mit auf das Säaggregat 1 übertragen wird, d.h. also, das Säschar 2 kann unabhängig vom Einzelkornsäaggregat 1 nach hinten und oben ausweichen. Des weiteren weist die Aushubhalterung 15 ebenfalls ein Langloch 22 auf, in welches der Bolzen 20 faßt. Hierdurch kann das Einzelkornsäaggregat 1 sich unabhängig vom Düngersäschar 2 nach oben bzw. auf und ab bewegen. Wenn über den Hubzylinder 16 das Einzelkornsäaggregat ausgehoben wird, kommt der Bolzen 20 an dem Ende des Langloches 22 in der Aushubhalterung 15 zur Anlage und hebt das Einzelkornsäaggregat in die in Fig. 2 wiedergegebene ausgehobene Position gegenüber dem Rahmen an. Gleichzeitig kommt das Ende des Langloches 21 an dem Bolzen 19 zur Anlage und schwenkt das Düngersäschar 2 um den Bolzen 11 entgegen der Fahrtrichtung nach hinten und gleichzeitig nach oben in die in Fig. 2 dargestellte Position. Hierdurch wird also gleichzeitig das Düngersäschar 2 nach hinten verschwenkt und aufgrund der Schwenkbewegung erhält das Düngersäschar 2 einen Abstand zum Boden, wenn das Einzelkornsäaggregat 1 mittels des Hydraulikzylinders 16 an- und ausgehoben wird.

**Ansprüche**

1. Einzelkornsämaschine mit einem Rahmen, an dem nebeneinander über Gestänge die einzelnen Einzelkornsäaggregate höhenbeweglich und aushebbar angeordnet sind, wobei zusätzlich zu den Einzelkornsäaggregaten vorzugsweise separate Düngerschare vorgesehen sind, die entgegen der Fahrtrichtung ausweichbar und/oder nach oben ausweichbar am Rahmen angeordnet sind, dadurch gekennzeichnet, daß jeweils zwischen dem Düngersäschar (2) und dem Gestänge (10,15) des Einzelkornsäaggregates (1) oder dem Einzelkornsäaggregat (1) ein Koppelglied (18) angeordnet ist.

2. Einzelkornsämaschine, nach Anspruch 1, dadurch gekennzeichnet, daß zwischen dem Rahmen (13,14) und dem Gestänge des Einzelkornsäaggregates (1) ein Aushubzylinder, vorzugsweise ein Hydraulikzylinder (16) angeordnet ist.

3. Einzelkornsämaschine, nach Anspruch 1, dadurch gekennzeichnet, daß das Koppelglied (18) als Koppelstange ausgebildet ist.

4. Einzelkornsämaschine, nach Anspruch 3, dadurch gekennzeichnet, daß die Koppelstange (18) mittels Bolzen (19,20) an dem Düngersäschar (2) un dem Gestänge (10,15) angeordnet ist, daß zumindest einer dieser Bolzen (19,20) in einem sich in der Koppelstange (18) angeordneten Langloch (21,22) faßt.

5. Einzelkornsämaschine, nach Anspruch 3, dadurch gekennzeichnet, daß die Koppelstange (18) aus mehreren zueinander beweglich einknickbaren Teilen besteht.

6. Einzelkornsämaschine, nach Anspruch 1, dadurch gekennzeichnet, daß das Koppelglied (18) als Zugseil ausgebildet ist.

7. Einzelkornsämaschine, nach Anspruch 1, dadurch gekennzeichnet, daß die Länge des Koppelgliedes (18) veränderbar und die unterschiedlichen Ablagetiefe der von den Einzelkornsäaggregaten (1) im Boden abgelegten Saatkörner anpaßbar ist.

FIG.1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-1 557 972 (FENDT) <br> * Seiten 3,4; Figur 1 * <br> --- | 1-3 | A 01 C 7/06 |
| Y <br> A | EP-A-0 033 950 (RAU) <br> * Seite 15, Zeilen 4-17; Figur 1 * <br><br> --- | 1-3 <br><br> 5 | |
| D,A | DE-A-3 546 468 (AMAZONEN-WERKE) <br> * Seite 12, Zeilen 13-31; Figur 6 * <br> --- | 2 | |
| A | GB-A- 813 395 (WALSH) <br> ----- | | |

| RECHERCHIERTE SACHGEBIETE (Int. Cl.4) |
|---|
| A 01 C <br> A 01 B |

Der vorliegende Recherchenbericht wurde für alle Patentansprüche erstellt

| Recherchenort | Abschlußdatum der Recherche | Prüfer |
|---|---|---|
| DEN HAAG | 01-08-1988 | KOCH J-M.L. |